# FASCICULE DE BREVET EUROPEEN

(11) **EP 1 620 336 B1**
(45) Date de publication et mention de la délivrance du brevet: **02.11.2006**
(21) Numéro de dépôt: 04742354.6
(22) Date de dépôt: 24.03.2004
(51) Int. Cl.: B65G 45/16

(54) **DISPOSITIF D'APPLICATION ELASTIQUE D'UNE LAME DE RACLEUR**
VORRICHTUNG ZUR ELASTISCHEN ANWENDUNG EINER ABSTREIFKLINGE
DEVICE FOR THE ELASTIC APPLICATION OF A SCRAPER BLADE

(30) Priorité: 22.04.2003 FR 0304915
(43) Date de publication de la demande: 01.02.2006
(73) Titulaire: SOCIETE FINANCIERE DE GESTION, 59100 Roubaix (FR)
(72) Inventeur: SIMOENS, Hervé, F-59700 Marcq-en-Baroeul (FR)
(74) Mandataire: Tournel, Jean Louis
(86) Numéro de dépôt international: PCT/FR2004/000748
(87) Numéro de publication internationale: WO 2004/094278

(56) Documents cités:
- DE-A- 3 402 407
- DE-A- 3 908 873
- GB-A- 2 165 200
- US-A- 4 838 409
- US-B1- 6 279 727

## Description

L'invention se rapporte à un dispositif d'application élastique d'une lame de racleur.

Pour éliminer les dépôts de matière sur les bandes transporteuses, il est connu d'utiliser un racleur qui comprend au moins une lame dont l'extrémité libre frotte sur la surface à nettoyer afm d'éliminer les dépôts.

Pour être efficace, la lame doit s'appuyer avec une force suffisante et, à cet effet, un moyen moteur est utilisé pour appliquer la lame sur la bande du convoyeur.

Outre le fait d'appliquer la lame avec une certaine force, le moyen moteur compense partiellement l'usure de la lame en maintenant toujours la partie active contre le tapis du convoyeur.

Dans un certain nombre de cas, la lame est montée sur un axe qui est guidé en rotation sur une embase fixe et un ressort de torsion sollicite l'extrémité de la lame vers le tapis du convoyeur.

La lame bascule donc autour d'un point ou un axe fixe.

Au lieu d'un ressort de torsion, on connaît par exemple une lame (WO-96/21607) qui est fixée sur son embase par l'intermédiaire de deux tiges métalliques élastiques disposées côte à côte par rapport à la ligne de raclage.

Dans d'autres cas, la lame de racleur est placée sous le convoyeur et le moyen moteur exerce une force déplaçant la lame dans un plan vertical.

On recherche précisément à obtenir un angle d'attaque constant.

Pour ce faire, la lame est, par exemple, montée sur l'embase par l'intermédiaire de deux biellettes formant une sorte de parallélogramme déformable et un moyen moteur permet de solliciter la déformation parallélogramme en sorte que la lame s'appuie sur le tapis du convoyeur. Un autre dispositif avec une lame de racleur est connu du document US-A-4 838 409.

On connaît par exemple un dispositif du type précité faisant appel 4 à une poche gonflable (WO-97/14635) ou alors à un contrepoids (GB-A-2.125.357). Ces racleurs dits sous jacents sont montés immédiatement après le tambour de renvoi situé en bout de convoyeur. Un tambour supplémentaire sert à augmenter la surface d'enroulement du tapis en contact avec le tambour de renvoi en vue d'augmenter l'adhérence.

Malheureusement l'espace disponible est limité et se pose constamment le problème du montage de ces racleurs sous jacents. L'invention se propose de fournir une solution simple.

A cet effet, l'invention a pour objet un dispositif d'application élastique destiné à solliciter l'extrémité d'une lame de racleur vers un tapis de convoyeur, ce dispositif d'application comprenant:
- un support pour sa fixation sur une embase, une platine pour y fixer la lame du racleur,
- une structure de liaison reliant le support à la platine pour former une sorte de parallélogramme déformable s'étendant dans un plan perpendiculaire au plan dans lequel s'étend la lame de racleur et
- un moyen ressort
ce dispositif d'application étant caractérisé en ce que la structure de liaison est constituée par un fil métallique comprenant deux branches parallèles comprenant chacune à l'une des extrémités au moins une spire formant ressort, les autres extrémités libres étant fixées sur l'une des deux pièces que sont la platine et le support, les spires étant fixées sur l'autre pièce.

L'invention sera bien comprise à l'aide de la description ci-après faite à titre d'exemple non limitatif en regard du dessin qui représente schématiquement:

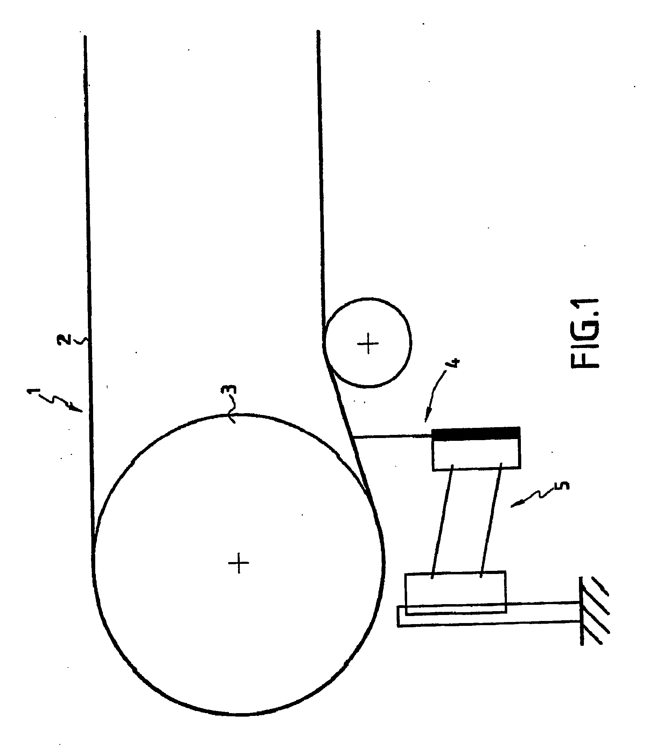

figure 1 :un convoyeur avec son racleur,
figure 2: un dispositif d'application élastique,

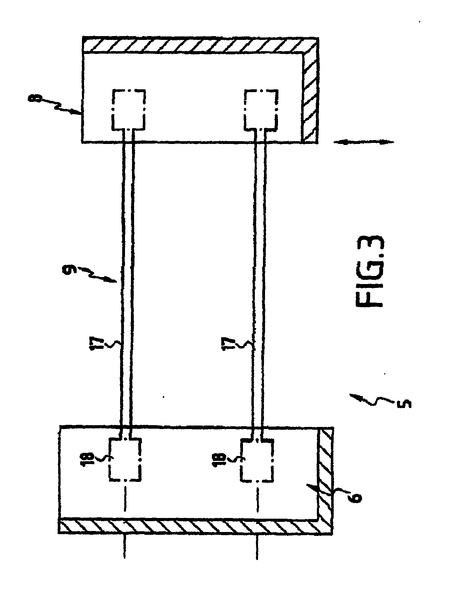

figure 3 : une variante d'un dispositif d'application élastique.

En se reportant au dessin, on voit un convoyeur 1 comprenant un tapis 2 de convoyeur circulant entre deux tambours 3 de renvoi dont au moins un est motorisé. Cet équipement comprend en outre un racleur 4 sous jacent disposé sous le convoyeur et travaillant par appui élastique du bord de raclage sur le tapis.

Pour travailler à angle constant on fait appel à un dispositif 5 d'application élastique destiné à solliciter l'extrémité d'une lame de racleur vers un tapis de convoyeur ce dispositif d'application comprenant:
- un support 6 pour sa fixation sur une embase 7,
- une platine 8 pour y fixer la lame du racleur,
- une structure 9 de liaison reliant le support à la platine pour former une sorte de parallélogramme déformable s'étendant dans un plan perpendiculaire au plan dans lequel s'étend la lame du racleur, et
- un moyen 10 ressort.

Dans une première variante de réalisation, la structure 9 de liaison est constituée par un fil 9A métallique comprenant deux branches 9B parallèles reliées par un branche 9C transversale pour former un U, la jonction entre les branches parallèles et la branche transversale formant au moins une spire 9D, les extrémités libres du U étant fixées sur l'une des deux pièces que sont la platine et le support, les spires étant fixées sur l'autre pièce.

Les extrémités libres du U forment une boucle 9E pour la fixation sur l'une des deux pièces 6,8 précitées.

Les branches 9B parallèles agissent alors comme les deux biellettes d'un parallélogramme tandis que la ou les spires 9D travaille comme des ressorts. Les spires et les boucles sont utilisées comme points de rotation des biellettes.

Ces branches 9B sont rigides par rapport à la déformation des spires 9D.

Comme on peut le voir, des vis 11 engagées au travers de ces spires et/ou boucles maintiennent la structure de liaison sur la platine et le support. Ces vis 11 constituent donc des points d'articulation.

Pour obtenir la charge souhaitée, on déplacera verticalement la position du support 6 par rapport à l'embase 7.

Pour ce faire, l'embase et/ou le support présente des moyens 12 pour autoriser une translation d'une pièce par rapport à l'autre et des moyens 13 de verrouillage.

On utilisera, par exemple, des lumières 12 sur une pièce et des vis 13 ou boulons sur l'autre pièce.

Pour la mise en tension, on peut faire appel à une vis 14 qui prend appui sur les deux pièces pour les écarter ou les rapprocher. Ainsi sur le dessin représenté, la vis 14 est engagée dans un taraudage 15 que comporte l'embase 7 et l'extrémité de cette vis prend appui sur le support 6.

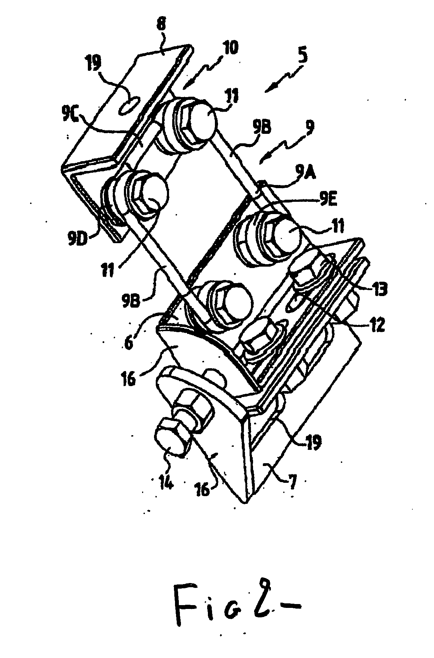

Dans la forme représentée en figure 2, on voit que le support et l'embase ont la forme d'une cornière dont une extrémité présente un gousset 16 reliant tes deux ailes de la cornière.

Le diamètre du fil, le nombre de spire, la taille de la spire et la qualité du fil permettent de déterminer la raideur du ressort.

Bien évidemment les platine et l'embase comportent des moyens 19 pour respectivement y fixer une lame et fixer l'embase sur le châssis du convoyeur.

Dans une seconde variante de réalisation, la structure 9 de liaison est constituée par un fil métallique comprenant deux branches 17 parallèles comprenant chacune à l'une des extrémités au moins une spire 18 formant un moyen ressort, les autres extrémités libres étant fixées sur l'une des deux pièces que sont la platine et le support, les spires étant fixées sur l'autre pièce.

Pour que la spire exerce son effet ressort, un moyen de verrouillage maintient l'une des extrémités de la spire.

Un axe de rotation est, avantageusement, prévu au niveau de la spire.

Dans le cas de la variante figurant sur la figure 2, c'est la branche transversale 9c qui verrouille la rotation.

Cette branche 9c pourrait être sectionnée et la partie de la brabche transversale restante verrouillée par un cavalier.

## Revendications

1. Dispositif (5) d'application élastique destiné à solliciter l'extrémité d'une lame de racleur vers un tapis de convoyeur ce dispositif d'application comprenant :
- un support (6) pour sa fixation sur une embase (7),
- une platine (8) pour y fixer la lame du racleur,
- une structure (9) de liaison reliant le support à la platine pour former une sorte de parallélogramme déformable s'étendant dans un plan perpendiculaire au plan dans lequel s'étend la lame de racleur, et
- un moyen (10) ressort
ce dispositif étant **CARACTERISE en ce que** la structure (9) de liaison est constituée par un fil métallique comprenant deux branches parallèles comprenant chacune à l'une des extrémités au moins une spire formant ressort, les autres extrémités libres étant fixées sur l'une des deux pièces que sont la platine et le support, les spires étant fixées sur l'autre pièce.

2. Dispositif d'application élastique destiné à solliciter l'extrémité d'une lame de racleur vers un tapis de convoyeur selon la revendication 1 **caractérisé en ce que** les spires formant ressorts que comportent les deux branches parallèles sont reliées par une branche transversale.

3. Dispositif d'application élastique destiné à solliciter l'extrémité d'une lame de racleur vers un tapis de convoyeur selon la revendication 1 ou 2 **caractérisé en ce que** les extrémités libres des branches forment une boucle (9 E) pour la fixation sur l'une des deux pièces (6, 8).

4. Dispositif d'application élastique destiné à solliciter l'extrémité d'une lame de racleur vers un tapis de convoyeur selon la revendication 1 **caractérisé en ce que** l'embase et/ou le support présente des moyens (12) pour autoriser une translation d'une pièce par rapport à l'autre et des moyens (13) de verrouillage.

5. Dispositif d'application élastique destiné à solliciter l'extrémité d'une lame de racleur vers un tapis de convoyeur selon la revendication 4 **caractérisé en ce qu'**il présente des lumières (12) sur une pièce que sont l'embase et le support et des vis (13) ou boulons sur l'autre pièce.

6. Dispositif d'application élastique destiné à solliciter l'extrémité d'une lame de racleur vers un tapis de convoyeur selon la revendication 4 **caractérisé en ce que**, pour la mise en tension, on fait appel à une vis (14) qui prend appui sur les deux pièces que sont l'embase et le support pour les écarter ou les rapprocher.

7. Dispositif d'application élastique destiné à solliciter l'extrémité d'une lame de racleur vers un tapis de convoyeur selon la revendication 6 **caractérisé en ce que** la vis (14) est engagée dans un taraudage (15) que comporte l'embase (7) et l'extrémité de cette vis prend appui sur le support (6).

8. Dispositif d'application élastique destiné à solliciter l'extrémité d'une lame de racleur vers un tapis de convoyeur selon la revendication 1 ou la revendication 4 **caractérisé en ce que** le support et l'embase ont la forme d'une cornière dont une extrémité présente un gousset (16) reliant les deux ailes de la cornière.

9. Dispositif d'application élastique destiné à solliciter l'extrémité d'une lame de racleur vers un tapis de convoyeur selon la revendication 3 **caractérisé en ce que** les spires et les boucles sont utilisées comme point de rotation des branches (9B, 17).

## Claims

1. Device (5) for applying an elastic force designed to bias the end of a scraper blade towards a conveyor belt, which applicator device comprises:
- a support (6) enabling it to be secured to a base (7),
- a plate (8) to which the blade of the scraper can be affixed,
- a linking structure (9) linking the support to the plate to form a sort of deformable parallelogram extending in a plane perpendicular to the plane in which the scraper blade extends, and
- a spring means (10)
said device being **CHARACTERISED in that** the linking structure (9) consists of a metal wire comprising two parallel branches, each having at least one turn at one of the ends forming a spring, the other free ends being fixed to one of the two parts constituting the plate and the support, and the turns are secured to the other part.

2. Device for applying an elastic force designed to bias the end of a scraper blade towards a conveyor belt as claimed in claim 1, **characterised in that** the turns forming springs incorporated in the two parallel branches are linked by a transverse branch.

3. Device for applying an elastic force designed to bias the end of a scraper blade towards a conveyor belt as claimed in claim 1 or 2, **characterised in that** the free ends of the branches form a loop (9 E) enabling them to be affixed to one of the two parts (6, 8).

4. Device for applying an elastic force designed to bias the end of a scraper blade towards a conveyor belt as claimed in claim 1, **characterised in that** the base and/or the support has means (12) for enabling one part to move in translation relative to the other and locking means (13).

5. Device for applying an elastic force designed to bias the end of a scraper blade towards a conveyor belt as claimed in claim 4, **characterised in that** it has holes (12) in one part, namely the base or the support, and screws (13) or bolts in the other part.

6. Device for applying an elastic force designed to bias the end of a scraper blade towards a conveyor belt as claimed in claim 4, **characterised in that**, in order to apply tension, a screw (14) which is supported on the two parts, namely the base and the support, is required to move the latter apart and towards one another.

7. Device for applying an elastic force designed to bias the end of a scraper blade towards a conveyor belt as claimed in claim 6, **characterised in that** the screw (14) is engaged in a thread (15) incorporated in the base (7) and the end of this screw is supported on the support (6).

8. Device for applying an elastic force designed to bias the end of a scraper blade towards a conveyor belt as claimed in claim 1 or claim 4, **characterised in that** the support and the base have the shape of an angle section, one end of which has a bracket (16) linking the two wings of the angle section.

9. Device for applying an elastic force designed to bias the end of a scraper blade towards a conveyor belt as claimed in claim 3, **characterised in that** the turns and the loops are used as a point of rotation for the branches (9B, 17).

## Patentansprüche

1. Elastische Andrückvorrichtung (5), die dazu bestimmt ist, das Ende eines Abstreiferblatts zu einem Förderband hin zu beaufschlagen, wobei diese Andrückvorrichtung enthält:
- eine Halterung (6) für deren Befestigung an einer Fußfläche (7),
- eine Platte (8), um daran das Abstreiferblatt zu befestigen,
- einen Verbindungsaufbau (9), der die Halterung mit der Platte verbindet, um eine Art verformbares Parallelogramm zu bilden, das sich in einer Ebene senkrecht zur Ebene erstreckt, in welcher das Abstreiferblatt verläuft, und
- ein Federmittel (10),
wobei diese Vorrichtung **dadurch gekennzeichnet ist, dass** der Verbindungsaufbau (9) aus einem Metalldraht besteht, der zwei parallele Schenkel enthält, die jeweils an dem einen Ende zumindest eine Federwindung aufweisen, wobei die anderen freien Enden an einem der beiden Teile Platte bzw. Halterung befestigt sind, wobei die Windungen an dem anderen Teil befestigt sind.

2. Elastische Andrückvorrichtung, die dazu bestimmt ist, das Ende eines Abstreiferblatts zu einem Förderband hin zu beaufschlagen, nach Anspruch 1, **dadurch gekennzeichnet, dass** die Federwindungen, welche die beiden parallelen Schenkel enthalten, über einen Querschenkel verbunden sind.

3. Elastische Andrückvorrichtung, die dazu bestimmt ist, das Ende eines Abstreiferblatts zu einem Förderband hin zu beaufschlagen, nach Anspruch 1 oder 2, **dadurch gekennzeichnet, dass** die freien Enden der Schenkel eine Schlaufe (9E) zur Befestigung an einem der beiden Teile (6, 8) bilden.

4. Elastische Andrückvorrichtung, die dazu bestimmt ist, das Ende eines Abstreiferblatts zu einem Förderband hin zu beaufschlagen, nach Anspruch 1, **dadurch gekennzeichnet, dass** die Fußfläche und/oder die Halterung Mittel (12) aufweist, um eine Verschiebung eines Teils bezüglich des anderen zu gestatten, sowie Verriegelungsmittel (13).

5. Elastische Andrückvorrichtung, die dazu bestimmt ist, das Ende eines Abstreiferblatts zu einem Förderband hin zu beaufschlagen, nach Anspruch 4, **dadurch gekennzeichnet, dass** sie an einem Teil, Fußfläche bzw. Halterung, Langlöcher (12) und an dem anderen Teil Schrauben (13) bzw. Bolzen aufweist.

6. Elastische Andrückvorrichtung, die dazu bestimmt ist, das Ende eines Abstreiferblatts zu einem Förderband hin zu beaufschlagen, nach Anspruch 4, **dadurch gekennzeichnet, dass** zum Erzielen einer Spannung eine Schraube (14) Anwendung findet, die sich an den beiden Teilen, Fußfläche und Halterung, abstützt, um sie zu spreizen bzw. anzunähern.

7. Elastische Andrückvorrichtung, die dazu bestimmt ist, das Ende eines Abstreiferblatts zu einem Förderband hin zu beaufschlagen, nach Anspruch 6, **dadurch gekennzeichnet, dass** die Schraube (14) in ein Innengewinde (15) eingreift, das die Fußfläche (7) aufweist, und das Ende dieser Schraube sich an der Halterung (6) abstützt.

8. Elastische Andrückvorrichtung, die dazu bestimmt ist, das Ende eines Abstreiferblatts zu einem Förderband hin zu beaufschlagen, nach Anspruch 1 oder Anspruch 4, **dadurch gekennzeichnet, dass** die Halterung und die Fußfläche die Form eines Winkels haben, von dem ein Ende einen Zwickel (16) aufweist, der die beiden Schenkel des Winkels verbindet.

9. Elastische Andrückvorrichtung, die dazu bestimmt ist, das Ende eines Abstreiferblatts zu einem Förderband hin zu beaufschlagen, nach Anspruch 3, **dadurch gekennzeichnet, dass** die Windungen und Schlaufen als Drehpunkt für die Schenkel (9B, 17) verwenden werden.
